# EUROPÄISCHE PATENTSCHRIFT

(11) **EP 0 810 049 B1**
(45) Veröffentlichungstag und Bekanntmachung des Hinweises auf die Patenterteilung: **20.02.2002**
(21) Anmeldenummer: 96108677.4
(22) Anmeldetag: 30.05.1996
(51) Int. Cl.: B23B 31/16

(54) **Kraftbetätigtes Spannfutter**
Powered chuck
Mandrin à commande motorisée

(43) Veröffentlichungstag der Anmeldung: 03.12.1997
(73) Patentinhaber: Forkardt Deutschland GmbH, 40699 Erkrath (DE)
(72) Erfinder: Antoni, Herbert, D-41472 Neuss (DE)
(74) Vertreter: LENZING GERBER

(56) Entgegenhaltungen:
- DE-A- 2 224 318
- DE-A- 3 823 933
- DE-B- 2 104 904
- DE-C- 832 834
- DE-C- 3 518 332
- DE-U- 1 641 977
- GB-A- 2 067 933
- US-A- 5 197 748

## Beschreibung

Die Erfindung betrifft ein kraftbetätigtes Spannfutter mit einem Futterkörper, in dem mindestens zwei radiale Backenführungen für jeweils eine, vorzugsweise aus Grund- und Aufsatzbacke bestehende Spannbacke ausgebildet sind, wobei eine Mehrzahl von Führungsnuten in den einander gegenüberliegenden Seitenflächen der Backenführungen und auf den Seitenflächen der Spannbacken diesen Führungsnuten entsprechende Führungsleisten ausgebildet sind.

Derartige Spannfutter sind aus der DE-PS 800 201 bekannt. Auch die EP-OS 546 926 zeigt ein Spannfutter mit einer Mehrzahl von Führungsnuten und Führungsleisten zwischen Grundbacke und Futterkörper, wobei bei dieser bekannten Konstruktion der vordere Teil des Futterkörpers zwecks verbesserter Fertigung in einzelne Segmente unterteilt ist, die mit dem hinteren Teil des Futterkörpers verschraubt werden.

Schließlich sind sogenannte Keilhakenfutter bekannt, bei denen die Spannbacken jeweils mittels eines Keilhakens in eine zugehörige Keilnut eines axial im Futterkörper geführten, mit einer Durchgangsbohrung für die Aufnahme von Werkstücken versehenen Spannkolbens eingreifen. **Ein Keilhakenfutter ist beispielsweise aus der DE-C 35 18 332 bekannt**. Bei diesen bekannten Keilhakenfuttern ist jede Spannbacke auf ihren gegenüberliegenden Seitenflächen mit einer Führungsleiste versehen, die in eine entsprechende Führungsnut in der radialen Backenführung des Futterkörpers eingreift.

Wegen des Eingriffes der an der Rückseite der Spannbacken angeformten Keilhaken in die Keilnuten des Spannkolbens und wegen der Ausbildung einer Durchgangsbohrung in diesem Spannkolben muß die hintere Führungsfläche der Backenführungen kürzer als ihre vordere Führungsfläche ausgebildet werden, so daß beim Innenspannen von Werkstücken aufgrund der verkürzten Führungen höhere Kippkräfte auftreten, die zu großen Flächenpressungen und damit einem höheren Verschleiß führen.

Eine solche Grundbacke ist aus der DE-A-38 23 933 bekannt. Die Grundbacke ist mit einer Führungsleiste ausgestattet, die im hinteren, innenliegenden Teil der Grundbacke angeordnet ist und die wegen des Keilhakens kürzer ausgeführt ist. Die hintere Führungsfläche ist kürzer als ihre vordere Führungsfläche ausgebildet. Beim Innenspannen von Werkstücken treten somit höhere Kippkräfte aufgrund der verkürzten Führungen auf, die zu großen Flächenpressungen und damit zu einem hohen Verschleiß führen.

Der Erfindung liegt die **Aufgabe** zugrunde, ausgehend von einem kraftbetätigten Spannfutter der eingangs beschriebenen Art die bekannten Keilhakenfutter derart weiterzubilden, daß deren systembedingte Nachteile vermieden werden.

Die **Lösung** dieser Aufgabenstellung durch die Erfindung ist dadurch gekennzeichnet, daß bei einem Keilhakenfutter, dessen Spannbacken jeweils mittels eines Keilhakens in eine zugehörige Keilnut eines axial im Futterkörper geführten, mit einer Durchgangsbohrung für die Aufnahme von Werkstücken versehenen Spannkolbens eingreifen mindestens zwei über die gesamte Länge der Spannbacke verlaufende Führungsleisten im frontseitigen Teil der Spannbacke und mindestens eine im radial verkürzten hinteren Teil der Spannbacke verlaufende Führungsleiste mit trapezförmigem Querschnittsprofil ausgebildet sind.

Mit diesem erfindungsgemäßen Vorschlag ergibt sich ein Keilhakenfutter, bei dem mindestens zwei über die gesamte radiale Länge der Backen verlaufende vordere und hintere Führungsflächen zwischen den Spannbacken und dem Futterkörper zur Übertragung der Kräfte und Momente zur Verfügung stehen, so daß auch bei einer Innenspannung hohe Kippmomente und Kippkräfte aufgenommen werden können. Insgesamt zeichnet sich das erfindungsgemäße Keilhakenfutter durch eine formstabile Ausgestaltung der Backenführungen aus, bei der alle Führungen gleichmäßig über die gesamte Länge der einzelnen Führungen tragen.

Weitere Einzelheiten, Merkmale und Vorteile der Erfindung werden nachfolgend anhand der zugehörigen Zeichnung erläutert, in der ein Ausführungsbeispiel eines erfindungsgemäßen kraftbetätigten Spannfutters schematisch dargestellt ist. In der Zeichnung zeigt:
- Fig. 1: eine perspektivische Explosionszeichnung eines erfindungsgemäßen Spannfutters und
- Fig. 2: eine perspektivische Ansicht des Spannfutters gemäß Fig. 1 im zusammengesetzten Zustand.

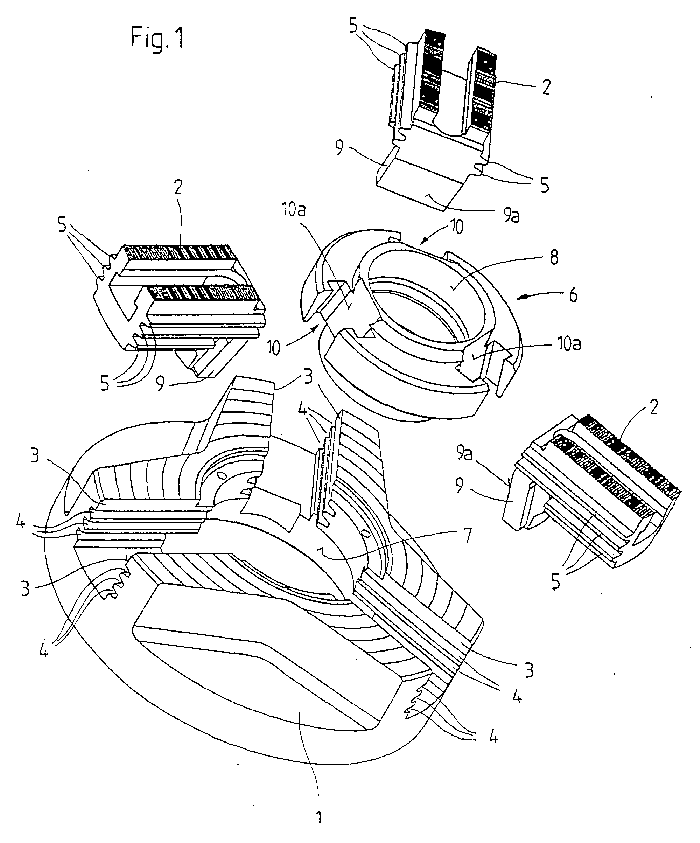

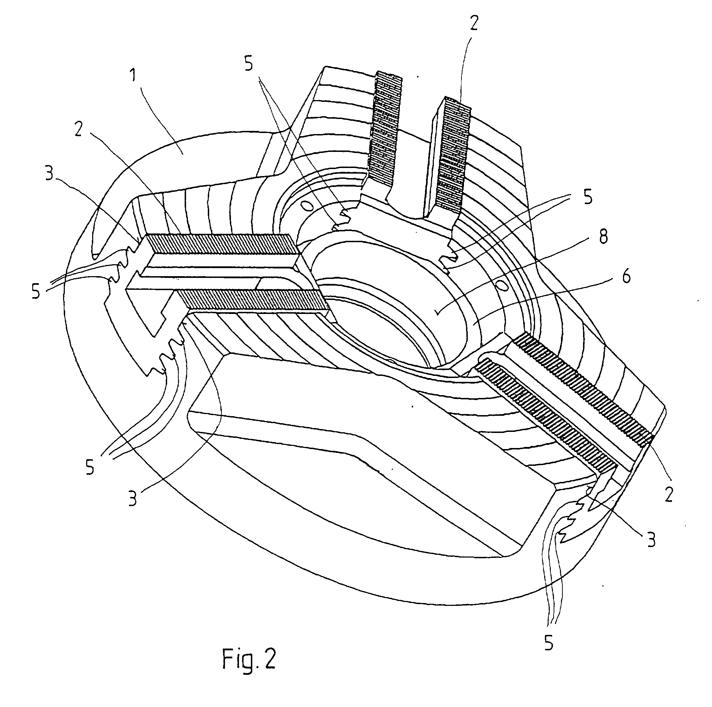

Das in den Abbildungen Fig. 1 und 2 dargestellte Spannfutter weist einen Futterkörper 1 auf, in dem drei Spannbacken 2 radial verschiebbar in Backenführungen 3 geführt sind. Zu diesem Zweck sind in den einander gegenüberliegenden Seitenflächen der Backenführungen 3 eine Mehrzahl von Führungsnuten 4 sowie auf den Seitenflächen der Spannbacken 2 diesen Führungsnuten 4 entsprechende Führungsleisten 5 ausgebildet, die mit den Führungsnuten 4 zusammenwirken. Die radiale Verstellung der Spannbacken 2 geschieht durch einen Spannkolben 6, der in einer Bohrung 7 des Futterkörpers 1 in axialer Richtung verschiebbar ist und der zur Frontseite und zu einer Durchgangsbohrung 8 des Spannfutters hindurch eine (nicht dargestellte) Schutzbuchse abgedeckt wird. Zur Aufnahme von zu bearbeitenden Werkstücken weist der in der Bohrung 7 des Futterkörpers 1 angeordnete Spannkolben 6 die mittige Durchgangsbohrung 8 auf.

Jede Spannbacke 2, welche im dargestellten Ausführungsbeispiel als Grundbacke ausgebildet ist, weist an ihrem radial innenliegenden hinteren Teil einen im Querschnitt T-förmigen Keilhaken 9 auf, der zur Radialverstellung der Spannbacken 2 über den Spannkolben 6 in entsprechend ausgestaltete Keilnuten 10 des Spannkolbens 6 einsetzbar ist. Zur Führung des Keilhakens 9 der Spannbacke 2 in der Keilnut 10 des Spannkolbens 6 ist der radial innenliegende hintere Teil des Keilhakens 9 mit einer durchgehenden Keilfläche 9a ausgebildet, die mit einer ebenfalls durchgehenden Keilfläche 10a der Keilnut 10 des Spannkolbens 6 zusammenwirkt.

Wie aus Fig. 1 ersichtlich, verlaufen die auf den Seitenflächen der Spannbacken 2 ausgebildeten Führungsleisten 5 im frontseitigen Teil der Spannbacke 2 über die gesamte Länge der Spannbacke 2, wohingegen im hinteren Teil der Spannbacke 2 die Führungsleisten 5 aufgrund der Ausbildung des Keilhakens 9 verkürzt ausgebildet sind. Als besonders vorteilhafte Form für die Ausbildung der Führungsleisten 5 hat sich ein trapezförmiges Querschnittsprofil erwiesen, wie es insbesondere der Abbildung Fig. 2 zu entnehmen ist.

Durch die Ausbildung der im frontseitigen Teil der Spannbacken 2 verlaufenden Führungsleisten 5 über die gesamte Länge der Spannbacken 2 wird erreicht, daß die beim Innenspannen von Werkstücken auftretenden hohen Kippmomente von der gesamten Länge der Spannbacken 2 über die Führungsleisten 5 und die Führungsnuten 4 aufgenommen werden können und somit keine unzulässig hohen, einen erhöhten Verschleiß zur Folge habenden Flächenpressungen auftreten können.

### Bezugszeichenliste:

- 1: Futterkörper
- 2: Spannbacke
- 3: Backenführung
- 4: Führungsnut
- 5: Führungsleiste
- 6: Spannkolben
- 7: Bohrung
- 8: Durchgangsbohrung
- 9: Keilhaken
- 9a: Keilfläche
- 10: Keilnut
- 10a: Keilfläche

## Patentansprüche

1. Kraftbetätigtes Spannfutter mit einem Futterkörper (1), in dem mindestens zwei radiale Backenführungen (3) für jeweils eine, vorzugsweise aus Grund- und Aufsatzbacke bestehende Spannbacke (2) ausgebildet sind, wobei eine Mehrzahl von Führungsnuten (4) in den einander gegenüberliegenden Seitenflächen der Backenführungen (3) und auf den Seitenflächen der Spannbacken (2) diesen Führungsnuten (4) entsprechende Führungsleisten (5) ausgebildet sind, wobei die Spannbacken (2) jeweils mittels eines Keilhakens (9) in eine zugehörige Keilnut (10) eines axial im Futterkörper (1) geführten, mit einer Durchgangsbohrung (8) für die Aufnahme von Werkstücken versehenen Spannkolbens (6) eingreifen, **dadurch gekennzeichnet,**
**daß** mindestens zwei über die gesamte Länge der Spannbacke (2) verlaufende Führungsleisten (5) im frontseitigen Teil der Spannbacke (2) und mindestens eine im radial verkürzten hinteren Teil der Spannbacke (2) verlaufende Führungsleiste (5) mit trapezförmigem Querschnittsprofil ausgebildet sind.

## Claims

1. Power-operated chuck having a chuck body (1) in which at least two radial jaw guides (3) for a respective chuck jaw (2), preferably consisting of a base jaw and a top jaw, are formed, a plurality of guide grooves (4) being formed in the side faces, opposite one another, of the jaw guides (3), and guide strips (5) which correspond to these guide grooves (4) being formed on the side faces of the chuck jaws (2), the chuck jaws (2) in each case engaging by means of a wedge hook (9) in an associated wedge groove (10) of a chucking piston (6) axially guided in the chuck body (1) and provided with a through-bore (8) for locating workpieces, **characterized in that** at least two guide strips (5) running over the entire length of the chuck jaw (2) are formed in the front-side part of the chuck jaw (2), and at least one guide strip (5) running in the radially shortened rear part of the chuck jaw (2) and having a trapezoidal cross section is formed.

## Revendications

1. Mandrin de serrage à actionnement motorisé, comportant un corps de mandrin (1) dans lequel au moins deux guidages de mâchoire radiaux (3) sont réalisés pour une mâchoire de serrage respective (2) constituée de préférence par une mâchoire de base et par une mâchoire rapportée, une pluralité de rainures de guidage (4) étant ménagées dans les surfaces latérales opposées l'une à l'autre des guidages de mâchoire (3), et des listels de guidage (5) correspondants à ces rainures de guidage (4) étant réalisés sur les surfaces latérales des mâchoires de serrage (2), les mâchoires de serrage (2) s'engageant chacune au moyen d'un crochet en coin (9) dans une rainure en coin associée (10) d'un piston de serrage (6) guidé axialement dans le corps de mandrin (1) et pourvu d'un perçage traversant (8) pour recevoir des pièces à usiner, **caractérisé en ce qu'**au moins deux listels de guidage (5) s'étendant sur toute la longueur de la mâchoire de serrage (2) sont réalisés dans la partie côté frontal de la mâchoire de serrage (2) et au moins un listel de guidage (5) à profil de section trapézoïdale s'étend dans la partie postérieure radialement raccourcie de la mâchoire de serrage (2).
